# EUROPÄISCHE PATENTSCHRIFT

(11) **EP 1 633 597 B1**
(45) Veröffentlichungstag und Bekanntmachung des Hinweises auf die Patenterteilung: **02.07.2008**
(21) Anmeldenummer: 04721145.3
(22) Anmeldetag: 17.03.2004
(51) Int. Cl.: B60Q 1/26

(54) **BELEUCHTUNGSVORRICHTUNG FÜR FAHRZEUGE MIT EINEM LEUCHTDIODEN UMFASSENDEN LEUCHTMODUL**
ILLUMINATION DEVICE FOR MOTOR VEHICLES, COMPRISING A LAMP MODULE PROVIDED WITH LIGHT-EMITTING DIODES
DISPOSITIF D'ECLAIRAGE POUR VEHICULES, COMPORTANT UN MODULE LUMINESCENT POURVU DE DIODES ELECTROLUMINESCENTES

(30) Priorität: 28.05.2003 DE 10324393; 15.07.2003 DE 10332127
(43) Veröffentlichungstag der Anmeldung: 15.03.2006
(73) Patentinhaber: Volkswagen AG, 38436 Wolfsburg (DE)
(72) Erfinder: MÜLLER, Michael, 38518 Gifhorn (DE); MÜLLER, Klaus, 38518 Gifhorn (DE); JANSSEN, André, 38550 Isenbüttel (DE); WEGNER, Berend, 38446 Wolfsburg (DE)
(74) Vertreter: Reitstötter - Kinzebach
(86) Internationale Anmeldenummer: PCT/EP2004/002778
(87) Internationale Veröffentlichungsnummer: WO 2004/106113

(56) Entgegenhaltungen:
- EP-A- 0 596 783
- EP-A- 0 949 450
- EP-A- 0 980 788
- EP-A- 1 213 531
- DE-A- 10 019 557
- DE-A- 10 043 660
- DE-A- 10 160 052
- GB-A- 2 139 340
- US-A- 3 425 056
- US-A- 5 838 247
- US-A- 2002 105 432
- PATENT ABSTRACTS OF JAPAN Bd. 1995, Nr. 03, 28. April 1995 (1995-04-28) & JP 6 349306 A (STANLEY ELECTRIC CO LTD), 22. Dezember 1994 (1994-12-22)

## Beschreibung

Die vorliegende Erfindung betrifft eine Beleuchtungsvorrichtung für Fahrzeuge nach dem Oberbegriff des Anspruchs 1.

Kraftfahrzeugleuchten, insbesondere Heckleuchten, die anstelle von Glühlampen oder Quarzlampen Leuchtdioden (LED: light emitting diode) als Leuchtmittel einsetzen, sind aus dem Stand der Technik hinlänglich bekannt. Nur beispielhaft sei auf die DE 33 15 785 A1, DE 39 16 875 A1, DE 39 30 214 A1 und DE 42 28 895 A1 verwiesen, die Kraftfahrzeug- bzw. Signalleuchten betreffen, welche Leuchtdioden als Leuchtmittel einsetzen.

Ferner ist aus der DE 100 52 655 A1 eine Beleuchtungsvorrichtung für Kraftfahrzeuge bekannt, bei der um die Projektionslinse eines Scheinwerfers eine mit Leuchtdioden bestückte Kreisringfläche angeordnet ist. Durch die auf der Ringfläche angeordneten Leuchtdioden können zusätzliche Signalleuchtflächen bereitgestellt werden. Sie können auch als Standlicht oder Blinklicht dienen. Das die Leuchtdioden umfassende Leuchtmodul umgibt somit die Abstrahlfläche des Projektionsscheinwerfers.

Aus der JP 6349306 A ist eine Befestigung für Lichtquellen bekannt, die von lichtemittierenden Dioden gebildet sind, bei welcher die Platinen für die Leuchtdioden auf einem gestuften Träger angeordnet sind.

Aus der US 5,838,247 ist eine Leuchte bekannt, bei der konzentrische Ringe mit lichtemittierenden Dioden vorgesehen sind, die parallel zur Lampenachse angeordnet sind.

Nachteilhaft an herkömmlichen Beleuchtungsvorrichtungen, die als Lichtquelle nur Leuchtdioden umfassen, ist, dass bei einem Defekt der Austausch des Leuchtmoduls teuer ist. Ferner sind die verschiedenen Lichtfunktionen der einzelnen Leuchtmodule nur schwer unterscheidbar.

Schließlich ist aus der EP 0 949 450 A2 eine Kraftfahrzeugleuchte bekannt, bei welcher eine Gehäusewand Durchbrüche aufweist, in denen jeweils eine Platine angeordnet ist, auf deren Innenseite eine Vielzahl von nebeneinander liegenden Leuchtdioden angeordnet ist. Des Weiteren sind am Leuchtenrand weitere lichtemittierende Dioden vorgesehen, die auf einer Platine sitzen, die am Rand gehalten ist.

Es ist die Aufgabe der vorliegenden Erfindung, eine Beleuchtungsvorrichtung der Eingangs genannten Art zu schaffen, deren Bauraumbedarf gering und die geringe Kosten bei einem Defekt verursacht. Ferner sollen die Leuchtmodule einfach und schnell austauschbar sein. Des Weiteren soll der Beleuchtungsvorrichtung von außen ein charakteristisches Erscheinungsbild verliehen werden, welches es erleichtert, die Beleuchtungsvorrichtung wieder zu erkennen. Dabei sollen verschiedene Lichtfunktionen der Beleuchtungsvorrichtung klar getrennt wahrgenommen werden.

Erfindungsgemäß wird diese Aufgabe durch eine Beleuchtungsvorrichtung mit den Merkmalen des Anspruchs 1 gelöst. Vorteilhafte Aus- und Weiterbildungen ergeben sich aus den Unteransprüchen.

Die erfindungsgemäße Beleuchtungsvorrichtung ist dadurch gekennzeichnet, dass die Leuchtmodule verschiedene Lichtfunktionen bereitstellen, dass das zweite Leuchtmodul das erste Leuchtmodul umgibt, dass die Leuchtdioden der Leuchtmodule gestuft zueinander angeordnet sind und dass die Leuchtmodule ineinander gesteckt sind und separat voneinander austauschbar sind.

Die gestufte Anordnung der Leuchtmodule bedeutet insbesondere, dass eine zweite Platine für die Leuchtdioden des zweiten Leuchtmoduls seitlich neben und hinter der ersten Platine für die Leuchtdioden des ersten Leuchtmoduls angeordnet ist. Die gestufte Anordnung hat den Vorteil, dass die verschiedenen Lichtfunktionen, die von den beiden Leuchtmodulen bereitgestellt werden, sehr leicht getrennt voneinander wahrgenommen werden können. Da die Leuchtmodule einzeln ausgetauscht werden können sind die Kosten bei einem Defekt bei einem der Leuchtmodule und der zur Behebung des Defekts erforderliche Austausch dieses Leuchtmoduls verringert. Herbei wird der Ausbau des ersten, vorderen Leuchtmoduls von der gestuften Anordnung erleichtert.

Das zweite Leuchtmodul ist optisch zurückgesetzt hinter dem ersten Leuchtmodul angeordnet. Beispielsweise kann das zweite Leuchtmodul von einem das erste Leuchtmodul umgebenden Ring gebildet sein. Dieser Ring ist insbesondere als Kreisring ausgebildet.

Gemäß einer bevorzugten Weiterbildung der erfindungsgemäßen Beleuchtungsvorrichtung können die Leuchtmodule mittels einer Schraubverbindung an dem Aufnahmeteil befestigt sein. Die Leuchtmodule können somit als Standardbauteil ausgeführt werden, das bei verschiedenen Fahrzeugen, die ein einheitliches Grunddesign der Beleuchtungseinrichtungen aufweisen, eingesetzt werden kann.

Das äußere Erscheinungsbild der Beleuchtungsvorrichtung wird ganz wesentlich von dem Design einer oder mehrerer Zwischenscheiben geprägt, die zwischen den Leuchtmodulen und einer vorzugsweise in Klarglasoptik ausgebildeten Abschlussscheibe angeordnet ist bzw. sind. Bei der Zwischenscheibe oder den Zwischenscheiben wird die von außen sichtbare Abstrahlfläche der jeweiligen Leuchtmodule gebildet. Sie wird von außen als im Wesentlichen homogene Lichtfläche wahrgenommen. Gemäß einer bevorzugten Ausgestaltung ist diese in Abstrahlrichtung der Beleuchtungseinrichtung angeordnete Zwischenscheibe so ausgebildet, dass der Lichtemission des von der ersten Lichtquelle emittierten Lichts eine Spinnennetzoptik verliehen wird. Hierdurch kann eine besonders homogene Abstrahlung erzielt werden.

Gemäß einer weiteren bevorzugten Ausgestaltung ist jeder Leuchtdiode ein Reflektor zugeordnet. Die Reflektoren des Leuchtmoduls füllen dieses so aus, dass sich keine lichttechnischen Totflächen ergeben. Auf diese Weise wird der Raumbedarf des jeweiligen Leuchtmoduls lichttechnisch optimal ausgenutzt. Des Weiteren wird hierdurch das Erscheinungsbild des jeweiligen Leuchtmoduls verbessert.

Gemäß einer bevorzugten Ausgestaltung der erfindungsgemäßen Beleuchtungsvorrichtung sind zur Bereitstellung einer Schlusslichtfunktion die Leuchtdioden des zweiten Leuchtmoduls so ansteuerbar, dass sie mit einer Leuchtkraft in einem Bereich von 5 % bis 20 % der maximalen Leuchtkraft der Leuchtdioden leuchten. Gemäß einer anderen Ausgestaltung sind zur Bereitstellung einer Schlusslichtfunktion die Leuchtdioden sowohl des ersten als auch des zweiten Leuchtmoduls so ansteuerbar, dass sie mit einer Leuchtkraft in einem Bereich von 5 % bis 20 % der maximalen Leuchtkraft der Leuchtdioden leuchten.

Des weiteren sind bevorzugt zur Bereitstellung einer Bremslichtfunktion die Leuchtdioden des ersten Leuchtmoduls so ansteuerbar, dass sie mit einer Leuchtkraft in einem Bereich von 60 % bis einschließlich 100 % der maximalen Leuchtkraft der Leuchtdioden leuchten.

Gemäß einer bevorzugten Weiterbildung sind die Leuchtdioden des zweiten Leuchtmoduls so genannte Duo-Leuchtdioden. Bei solchen Duo-Leuchtdioden sind zwei Leuchtdioden in einer Einheit untergebracht. Sie können daher in einer ersten und/oder einer zweiten Farbe leuchten. Zur Bereitstellung eines Fahrtrichtungsanzeigers leuchten die Leuchtdioden des zweiten Leuchtmoduls in einer Farbe, die sie von der Farbe für die Bereitstellung der Schlusslichtfunktion und der Bremslichtfunktion unterscheidet.

Die Erfindung wird nun anhand von Ausführungsbeispielen mit Bezug zu den Zeichnungen erläutert.
Fig. 1 zeigt ein erstes Beispiel einer Beleuchtungsvorrichtung,
Fig. 2 zeigt schematisch eine weitere Ausgestaltung der Beleuchtungsvorrichtung in einem Querschnitt,
Fig. 3 zeigt die in Fig. 2 gezeigte Ausgestaltung in einem Längsschnitt,
Fig. 4 zeigt eine Ausgestaltung der erfindungsgemäßen Beleuchtungsvorrichtung,
Fig. 5 zeigt noch eine weitere Ausgestaltung der erfindungsgemäßen Beleuchtungsvorrichtung,
Fig. 6 zeigt eine Ausgestaltung des Leuchtmoduls 1 nach dem Stand der Technik,
Fig. 7 zeigt eine Ausgestaltung des Leuchtmoduls 1 gemäß der Erfindung,
Fig. 8 zeigt ein Ausführungsbeispiel der erfindungsgemäßen Beleuchtungsvorrichtung,
Fig. 9 zeigt einen Schnitt durch das in Fig. 6 gezeigte Ausführungsbeispiel entlang der Linie A-A,
Fig. 10 zeigt einen Schnitt durch das in Fig. 6 gezeigte Ausführungsbeispiel entlang der Linie B-B,
Fig. 11 zeigt einen Schnitt durch das in Fig. 6 gezeigte Ausführungsbeispiel entlang der Linie C-C,
Fig. 12 zeigt einen Schnitt durch das in Fig. 6 gezeigte Ausführungsbeispiel entlang der Linie D-D,

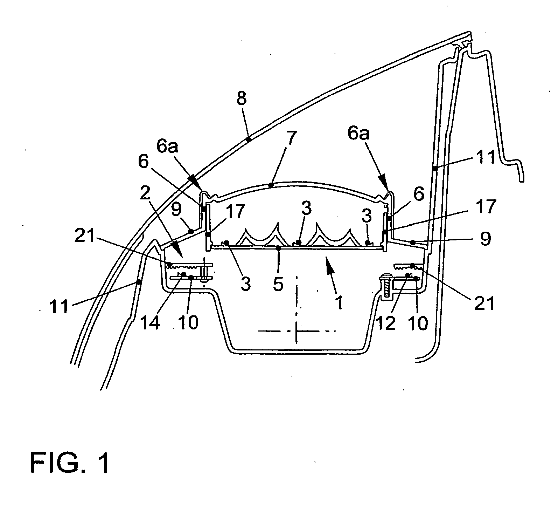

Ein erstes Beispiel wird mit Bezug zu Fig. 1 erläutert. Die Beleuchtungsvorrichtung dieses Beispiels stellt ein Schluss-/Bremslicht sowie als Fahrtrichtungsanzeiger ein Blinklicht bereit. Die Beleuchtungsvorrichtung umfasst ein erstes Leuchtmodul 1 und ein zweites Leuchtmodul 2.

Das Leuchtmodul 1 umfasst mehrere Leuchtdioden 3, eine Platine 5, auf welcher die Leuchtdioden 3 befestigt sind, und Reflektorflächen 18, welche das von den Leuchtdioden 3 emittierte Licht in Abstrahlrichtung der Beleuchtungsvorrichtung reflektieren. Auf der Platine 5 sind Leiterbahnen vorgesehen, welche die Anschlüsse der Leuchtdioden 3 mit Strom versorgen und diese ansteuern. Außerdem ist die Vorschaltelektronik für die Leuchtdioden auf dieser Platine 5 vorgesehen. In dem gezeigten Beispiel sind insgesamt 16 rote Leuchtdioden auf der Platine 5 befestigt. Die Platine 5 ist kreisrund. Es handelt sich um eine Standardplatine, die bei mehreren Fahrzeugen mit einheitlichem Grunddesign eingesetzt werden kann.

Die Befestigung des ersten Leuchtmoduls 1 in der Beleuchtungsvorrichtung erfolgt über eine Steck-, Clip- und/oder Rastverbindung an einer Aufnahme 6. In dem in Fig. 1 gezeigten Beispiel ist die Platine 5 an ihrem Rand mit einem Gehäuseelement 17 verbunden. Über dieses Gehäuseelement 17 erfolgt die Befestigung des ersten Leuchtmoduls 1 an der Aufnahme 6. Es ist mit der Aufnahme 6 verrastet. Es sind jedoch auch andere lösbare Verbindungen zwischen dem Gehäuseelement 17 bzw. der Platine 5 und der Aufnahme 6 möglich. Die Verbindung zwischen dem Leuchtmodul 1 und der Aufnahme 6 sollte ein einfaches Herausnehmen und Einsetzen des Leuchtmoduls 1, wie z. B. bei herkömmlichen Glühlampen, ermöglichen. Die Aufnahme 6 ist im gezeigten Beispiel ein Teil der Zwischenlichtscheibe 7. Das Leuchtmodul 1 ist somit mit der Zwischenlichtscheibe 7 verrastet.

Die elektrische Anbindung der Platine 5 kann entweder über die Steck-, Clip- und/oder Rastverbindung zwischen dem Leuchtmodul 1 und der Aufnahme 6 erfolgen oder separat davon. Im gezeigten Beispiel dient die Verbindung zwischen dem Gehäuse 17 des Leuchtmoduls 1 und der Aufnahme 6 nur der mechanischen Befestigung des Leuchtmoduls 1 und die elektrische Anbindung der Platine erfolgt über separate Zuleitungen.

Das zweite Leuchtmodul 2 ist für einen als oranges Blinklicht ausgebildeten Fahrtrichtungsanzeiger ausgestaltet. Als Lichtquellen dienen mehrere Leuchtdioden 14. Sie sind auf einer Platine 10 montiert. Auf der Platine 10 sind insgesamt 24 Leuchtdioden in der Farbe Gelb oder in der Farbe Rot befestigt. Die Platine 10 kann entweder auch mittels einer Steck-, Clip- und/oder Rastverbindung an einer Aufnahme, wie z.B. dem Gehäuse 11 der Beleuchtungsvorrichtung, befestigt sein. Andererseits kann die Platine 10 auch an das Gehäuse 11 angeschraubt sein.

In Abstrahlrichtung der Leuchtdioden 14 ist eine Zwischenlichtscheibe 9 angeordnet, die in Klarglasoptik ausgeführt ist. Die Zwischenscheibe 9 ist zwischen einem Gehäuse 11 der Beleuchtungsvorrichtung einerseits und der Aufnahme 6 für das erste Leuchtmodul 1 andererseits vorgesehen. Sie bildet einen Kreisring, der das erste Leuchtmodul 1 umgibt. Sie geht direkt in die Aufnahme 6 und schließlich in die Zwischenscheibe 7 für das erste Leuchtmodul 1 über. Die Zwischenscheibe 9, die Aufnahme 6 und die Zwischenscheibe 7 können somit einstückig ausgebildet sein. Im Bereich der Aufnahme 6 kann eine Metallschicht 6a, z.B. durch Bedampfung, aufgebracht sein. Es kann beispielsweise Chrom aufgedampft werden. Diese Metallschicht grenzt die Zwischenscheibe 9 optisch von der Zwischenscheibe 7 ab.

Zwischen der Zwischenlichtscheibe 9 und den Leuchtdioden 14 ist ferner wahlweise noch eine weitere Zwischenscheibe 21 vorgesehen sein, mit welcher der Lichtaustritt des von den Leuchtdioden 14 emittierten Lichts beeinflusst werden kann.

Zwischen der Platine 5 des ersten Leuchtmoduls 1 und der Platine 10 des zweiten Leuchtmoduls 2 ist eine gestufte Anordnung vorgesehen. Die ringförmige Platine 10 befindet sich hinsichtlich der Abstrahlrichtung hinter der Platine 5, in radialer Richtung befindet sich die Platine 10 seitlich von der Platine 5, d.h. sie umgibt das Leuchtmodul 1.

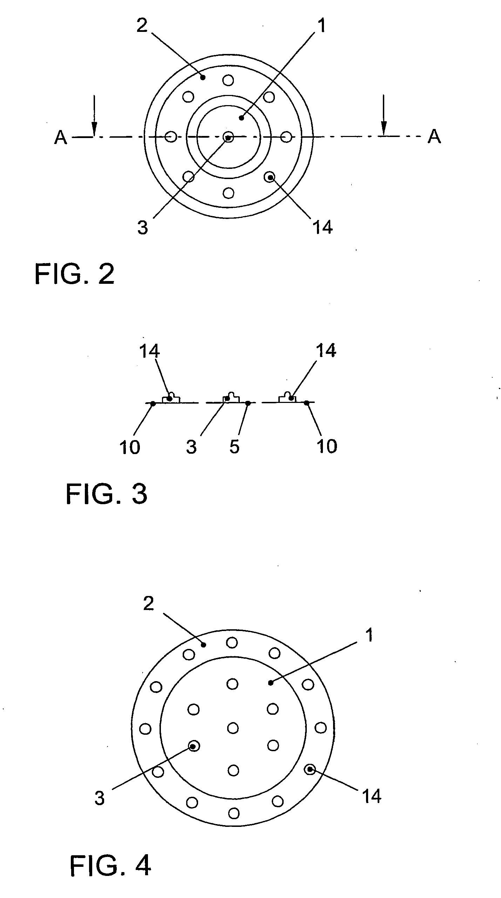

In den Fig. 2 bis 5 sind weitere mögliche Ausgestaltungen gezeigt, die in Verbindung mit dem zuvor beschriebenen Beispiel realisiert werden können. Die Fig. 2 und 3 zeigen eine Ausbildung, bei der das innenliegende Leuchtmodul 1 als Fahrtrichtungsanzeiger ein Blinklicht bereitstellt und das dieses Leuchtmodul 1 umgebende zweite Leuchtmodul 2 ein Brems- und Schlusslicht bereitstellt. Die acht Leuchtdioden 14 des Leuchtmoduls 2 sind rot, die Leuchtdiode 3 des Leuchtmoduls 1 ist gelb. Sie sind auf getrennt voneinander vorgesehenen Platinen 5 und 10 befestigt. Diese befinden sich jedoch in einer Ebene. Der Durchmesser der Beleuchtungsvorrichtung ist in diesem Fall kompatibel mit herkömmlichen Beleuchtungsvorrichtungen für Fahrzeuge, so dass die Beleuchtungsvorrichtung beispielweise in ein Hecklicht eines Fahrzeugs ohne Veränderung der Aufnahmen eingebaut werden kann. Bei den Platinen 5 und 10 handelt es sich um Standardplatinen, die in mehreren Fahrzeugen eingesetzt werden können, wenn das Grunddesign dieser Fahrzeuge vereinheitlicht wurde. Dabei sind die Platinen 5 und 10 durch eine Steck- und/oder Rastverbindung wie herkömmliche Glühlampen austauschbar.

Fig. 4 zeigt eine weitere Ausgestaltung, bei der das erste innenliegende Leuchtmodul 1 das Brems- und Schlusslicht bereitstellt und der außenliegende Ring des Leuchtmoduls 2 als Fahrtrichtungsanzeiger ein Blinklicht. Auch hier sind alle Lichtquellen Leuchtdioden. Die Ansteuerung der Leuchtdioden erfolgt dabei so, dass die Lichtintensität des Schlusslichts 5 % ist und des Bremslichts 60 % oder, wenn eine Nebelschlussleuchte angeschaltet ist, 90 %.

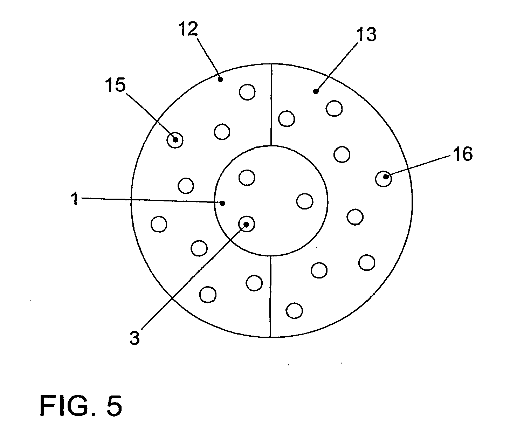

In Fig. 5 ist eine weitere Ausgestaltung gezeigt, bei der das Leuchtmodul 2 geteilt ist und verschiedene Leuchtfunktionen bereitstellt. Zum einen kann es im Bereich 12 ein Schluss- und Bremslicht bereitstellen und zum anderen im Bereich 13 eine Nebelschlussleuchte. Für das Schluss- und Bremslicht sind die Leuchtdioden 15 vorgesehen und für die Nebelschlussleuchten die Leuchtdioden 16. Alle Leuchtdioden sind in roter Farbe ausgeführt, sie werden jedoch je nach ihrer Lichtfunktion getrennt angesteuert. Die mittleren drei Leuchtdioden 3 der in Fig. 5 gezeigten Ausbildung sind gelbe Leuchtdioden für das Blinklicht des Fahrtrichtungsanzeigers.

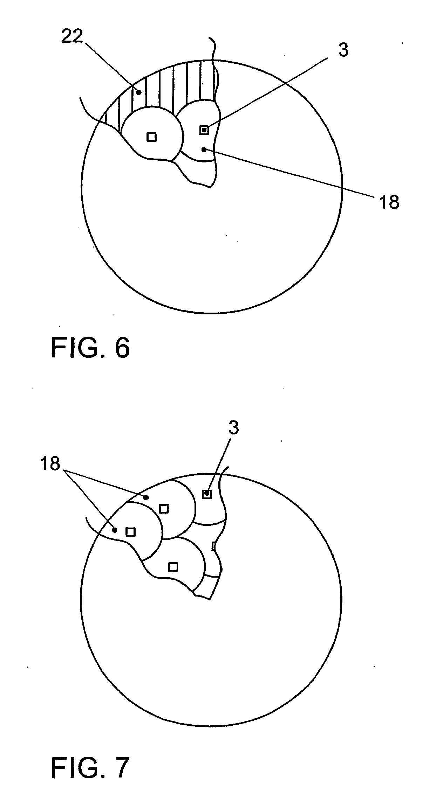

Anhand der Fig. 6 und 7 wird eine weitere Ausgestaltung eines Leuchtmoduls, das Leuchtdioden aufweist, erläutert. Dabei zeigt die Fig. 6 eine Aufsicht auf ein bekanntes Leuchtmodul und die Fig. 7 die erfindungsgemäße Ausgestaltung des Leuchtmoduls. Diese erfindungsgemäße Ausgestaltung kann in Verbindung mit den zuvor erläuterten Beispielen, insbesondere bei dem Leuchtmodul 1, verwendet werden. Jeder Leuchtdiode 3 sind Reflektoren 18 zugeordnet. Diese Reflektoren 18 sind in Aufsicht im Wesentlichen kreisförmig. Damit die Fläche des Leuchtmoduls möglichst gut ausgefüllt wird, sind die Reflektoren 18 zum Teil ausgeschnitten. Bei bekannten Leuchtmodulen dieser Art ergibt sich im Randbereich des Leuchtmoduls eine lichttechnische Totfläche 22. Bei der erfindungsgemäßen Ausgestaltung des Leuchtmoduls wird diese lichttechnische Totfläche 22 vermieden. Die Reflektoren 18 füllen das Leuchtmodul 1 vollständig aus. Hierzu sind im Randbereich des beispielsweise scheibenförmigen Leuchtmoduls 1 die Reflektoren 18 entsprechend ausgeschnitten.

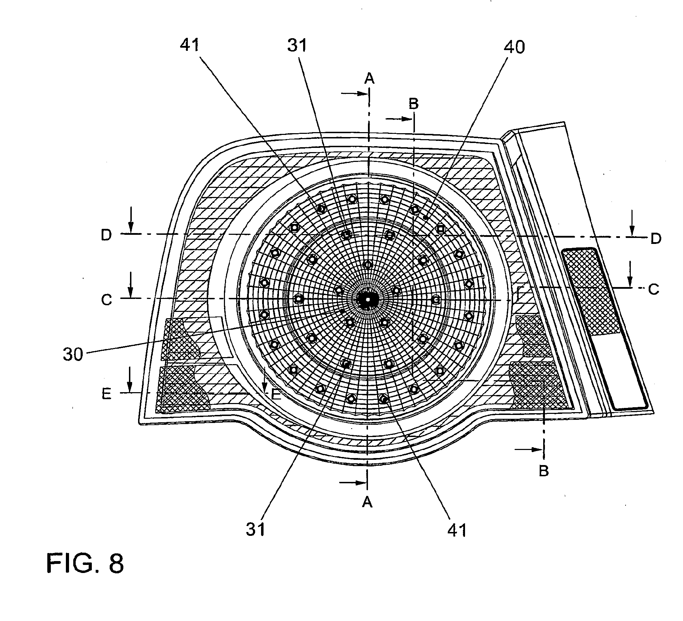

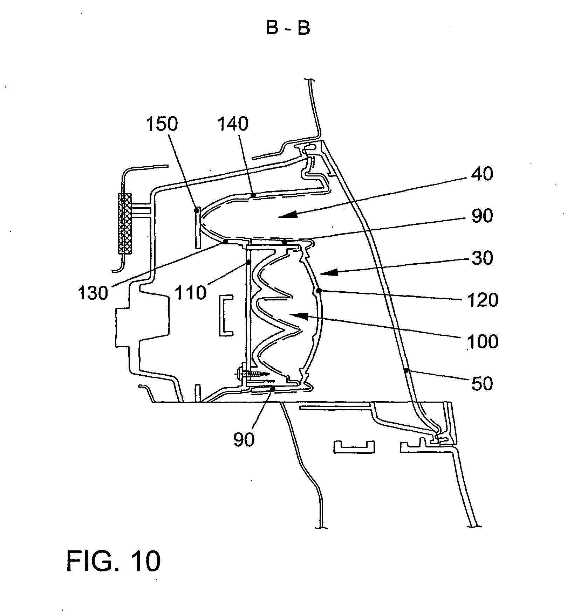

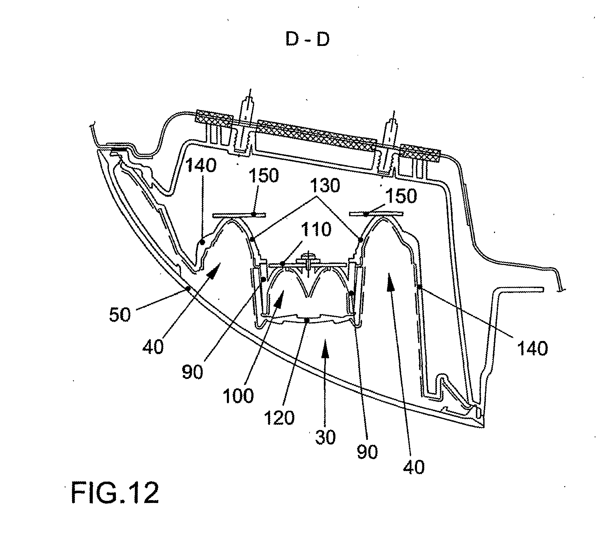

Die Fig. 8 bis 12 zeigen das Ausführungsbeispiel der erfindungsgemäßen Beleuchtungsvorrichtung in einer Ansicht von außen und verschiedenen Schnittansichten.

Der grundsätzliche Aufbau der Beleuchtungsvorrichtung ist wie folgt:

Im Inneren der Beleuchtungsvorrichtung ist ein erstes Leuchtmodul 30 vorgesehen, das insgesamt 15 Leuchtdioden, die auf zwei konzentrischen Ringen angeordnet sind, umfasst. Der Aufbau dieses ersten Leuchtmoduls 30 ist im Wesentlichen zylindrisch, wobei die Zylinderwand hervorsteht und die Leuchtdioden 31 mit ihren Reflektoren im Inneren des Zylinders untergebracht sind. Das erste Leuchtmodul 30 wird von einem zweiten Leuchtmodul 40 umgeben, das die Leuchtdioden 41 umfasst. Es sind insgesamt 20 Leuchtdioden auf einem Kreisring angeordnet. Das zweite Leuchtmodul 40 ist gestuft zu dem ersten Leuchtmodul 30 angeordnet. In Abstrahlrichtung der Beleuchtungsvorrichtung ist das zweite Leuchtmodul 40 zurückgesetzt angeordnet. Beide Leuchtmodule 30 und 40 sind getrennt voneinander an einer oder mehreren Aufnahmen befestigt. Sie sind daher einzeln austauschbar.

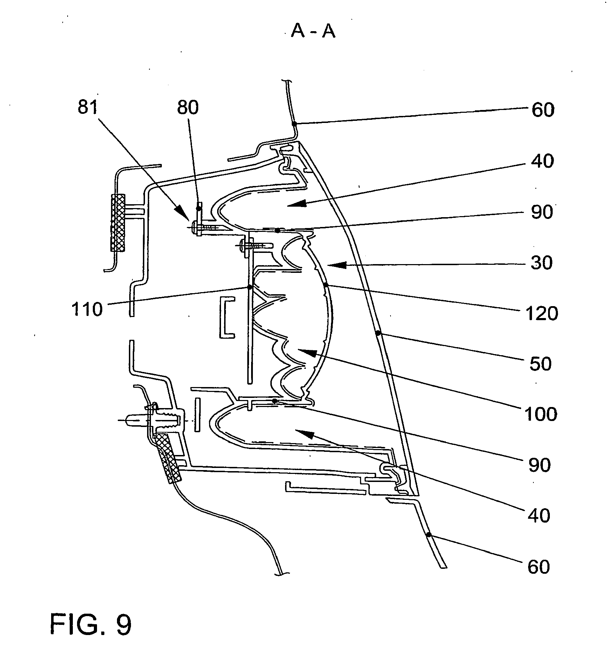

Im Folgenden wird die Beleuchtungsvorrichtung detaillierter mit Bezug zu den Schnittdarstellungen der Fig. 9 bis 12 erläutert.

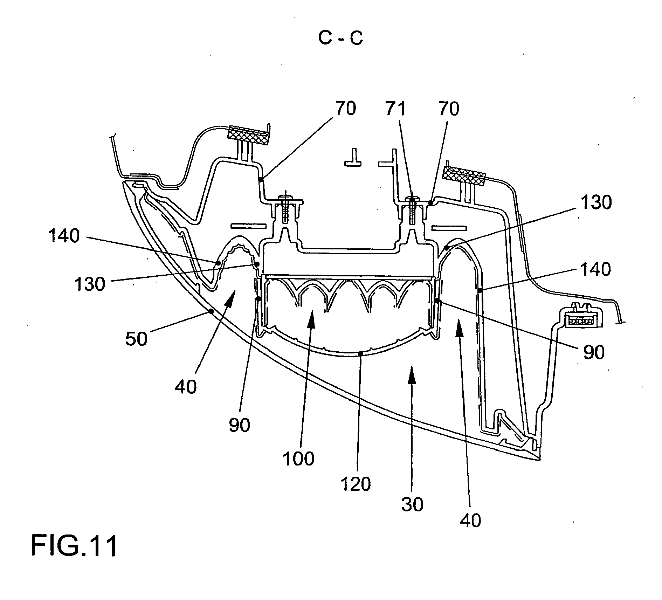

Die Beleuchtungsvorrichtung wird nach außen durch eine Lichtscheibe 50 abgeschlossen, die vorzugsweise in Klarglasoptik ausgeführt ist. Die Lichtscheibe 50 grenzt an Karosserieteile 60 an. Im Inneren der Aufnahmeöffnung für die Beleuchtungsvorrichtung ist die Aufnahme 70 (vgl. Fig. 11) für die Befestigung des ersten Leuchtmoduls 30 vorgesehen. Für die Befestigung des zweiten Leuchtmoduls 40 ist die Aufnahme 80 (vgl. Fig. 9) vorgesehen. Die Leuchtmodule 30 und 40 werden mittels der Schrauben 71 und 81 an diesen Aufnahmen 70 und 80 befestigt.

Das erste Leuchtmodul 30 weist eine seitliche zylindrische Wand 90 auf. Innerhalb dieser Begrenzung 90 befinden sich wabenförmige Reflektorflächen 100, in deren Waben jeweils die Leuchtdioden 31 angeordnet sind. Die Reflektorflächen 100 bestehen aus einer Basis beispielsweise aus Kunststoff, die mit einer reflektierenden Schicht, z. B. aus Aluminium oder Chrom, bedampft ist. Die Leuchtdioden 31 sind auf einer ersten Platine 110 befestigt, die innerhalb der zylindrischen Wand 90 hinter den Reflektorflächen 100 angeordnet ist. Bei den Befestigungsstellen für die Leuchtdioden 31 weisen die Reflektorflächen 100 jeweils Öffnungen auf. In Abstrahlrichtung der Leuchtdioden 31 ist an der zylindrischen Wand 90 eine Zwischenlichtscheibe 120 vorgesehen.

Das zweite Leuchtmodul 40 umgibt das erste Leuchtmodul 30 konzentrisch. Dabei ist es optisch zurückgesetzt hinter dem ersten Leuchtmodul 30 angeordnet. Es umfasst eine innere Reflektorfläche 130, die im Wesentlichen die zylindrische Wand 90 des ersten Leuchtmoduls 30 in Abstrahlrichtung der Beleuchtungsvorrichtung nach hinten (entgegen der Abstrahlrichtung) fortsetzt. Am Ende biegt sich diese Reflektorwand 130 radial nach außen, bis zu der Stelle, an der die Leuchtdiode 41 des zweiten Leuchtmoduls 40 befestigt ist. An der radial äußeren Seite besitzt des zweite Leuchtmodul 40 eine Reflektorfläche 140, die sich im Wesentlichen so weit wie die zylindrische Wand 90 nach vorne erstreckt. Die Reflektorflächen 130 und 140 des zweiten Leuchtmoduls 40 bilden auch wabenförmige Vertiefungen für die Leuchtdioden 41. Sie sind auch auf einer ringförmigen zweiten Platine 150 befestigt. Dabei sind die Leuchtdioden 41 in Abstrahlrichtung hinter den Leuchtdioden 31 angeordnet. Ferner umgeben die Leuchtdioden 41 die Leuchtdioden 31 konzentrisch.

Die beiden Leuchtmodule 30 und 40 sind ineinander gesteckt. Sie lassen sich separat voneinander austauschen. Um das erste Leuchtmodul 30 herauszunehmen, müssen nur die Schrauben 71 gelöst werden. Das Leuchtmodul 30 kann dann herausgezogen werden. Um das Leuchtmodul 40 auszutauschen, müssen nur die Schrauben 81 gelöst werden.

Für die Ansteuerung der Leuchtdioden 31 und 41 sind ein oder zwei Steuergeräte vorgesehen, die mit den Platinen 110 und 150 verbunden sind. Die Steuergeräte können entweder direkt auf den Platinen 110 bzw. 150 vorgesehen sein oder separat befestigt sein und elektrisch mit den Platinen 110 und 150 verbunden sein. Steuergeräte steuern die Leuchtdioden 31 und 41 so an, dass beispielsweise folgende Lichtfunktionen bereitgestellt werden können:

Für die Schlusslichtfunktion werden die Leuchtdioden 41 des zweiten Leuchtmoduls 40 angesteuert. Für die Schlusslichtfunktion leuchten sie jedoch mit verminderter Leuchtkraft. Falls die maximale Leuchtkraft 100 % ist, ist die Leuchtkraft für die Schlusslichtfunktion in einem Bereich von 5 % bis 20 %. Bevorzugt ist ein Bereich von 10 % bis 20 %. Bei einer anderen Ausgestaltung leuchten für die Schlusslichtfunktion zusätzlich die Leuchtdioden 31 des ersten Leuchtmoduls 30 mit der gleichen verringerten Leuchtkraft wie die Leuchtdioden 41 des zweiten Leuchtmoduls 40.

Für die Bremslichtfunktion werden die Leuchtdioden 31 des ersten Leuchtmoduls 30 so angesteuert, dass sie mit erhöhter Leuchtkraft leuchten. Beispielsweise leuchten sie mit einer Leuchtkraft in einem Bereich von 60 % bis 100 %. Bevorzugt leuchten die Leuchtdioden 31 für die Bremslichtfunktion mit maximaler Leuchtkraft, d.h. mit 100 %.

Um mit der Beleuchtungsvorrichtung auch einen Fahrtrichtungsanzeiger bereit zu stellen, können die Leuchtdioden 41 des zweiten Leuchtmoduls 41 als Duo-Leuchtdioden ausgeführt sind. In solchen Duo-Leuchtdioden sind zwei Leuchtdioden integriert, die mit zwei verschiedenen Farben leuchten können. Beispielsweise kann eine solche Duo-Leuchtdiode in rot und/oder orange leuchten. Für die Bereitstellung des Fahrtrichtungsanzeigers werden die Duo-Leuchtdioden so angesteuert, dass sie blinken und oranges Licht emittieren.

Als Leuchtdioden für das Schluss-/Bremslicht sowie für das Blinklicht können solche vom Typ Power-TopLED der Fa. Osram Optosemiconductors verwendet werden. Die Anzahl der in den Ausführungsbeispielen verwendeten Leuchtdioden ist beispielhaft. Sie kann je nach Lichtfunktion und Lichtintensität der verwendeten Leuchtdioden variieren. Ferner können Leuchtdioden des Typs Super-Flux-LED der Fa. LumiLED verwendet werden. Die Anzahl, der in den Ausführungsbeispielen verwendeten Leuchtdioden ist beispielhaft. Sie kann je nach Lichtfunktion und Lichtintensität der verwendeten Leuchtdioden variieren. Alle Leuchtdioden erhalten zur Strombegrenzung eine Beschaltung mit Vorwiderständen sowie eine Diode zum Schutz gegen Verpolung und negative Spannungsspitzen. Eine Dimmung der Leuchtdioden für einen Wechsel vom Bremslicht auf Schlusslicht wird durch Taktung aus dem Hecksteuergerät realisiert.

Schließlich wird darauf hingewiesen, dass durch die zuvor beschriebenen Beleuchtungsvorrichtungen noch weitere Aufteilungen von Lichtfunktionen bereitgestellt werden können. Beispielweise kann das erste Leuchtmodul einen Rückfahrscheinwerfer bereitstellen und das zweite Leuchtmodul eine Nebelschlussleuchte. Ferner kann das erste Leuchtmodul ein Rückfahrscheinwerfer sein und das zweite Leuchtmodul ein Schluss-/Bremslicht. Schließlich kann das erste Leuchtmodul sowohl einen Rückfahrscheinwerfer als auch eine Nebelschlussleuchte und das zweite Leuchtmodul das Schluss-/Bremslicht bereitstellen.

## Patentansprüche

1. Beleuchtungsvorrichtung für Fahrzeuge mit einem ersten Leuchtmodul (30) und einem zweiten Leuchtmodul (40), die jeweils eine Vielzahl von Leuchtdioden (31, 41) umfassen,
**dadurch gekennzeichnet,**
**dass** die Leuchtmodule (30,40) verschiedene Lichtfunktionen bereitstellen, dass das zweite Leuchtmodul (40) das erste Leuchtmodul (30) umgibt, dass die Leuchtdioden (31, 41) der Leuchtmodule (30,40) gestuft zueinander angeordnet sind und dass die Leuchtmodule (30, 40) ineinander gesteckt sind und separat voneinander austauschbar sind.

2. Beleuchtungsvorrichtung nach Anspruch 1,
**dadurch gekennzeichnet,**
**dass** das zweite Leuchtmodul (40) optisch zurückgesetzt hinter dem ersten Leuchtmodul (30) angeordnet ist.

3. Beleuchtungsvorrichtung nach Anspruch 1 oder 2,
**dadurch gekennzeichnet,**
**dass** das zweite Leuchtmodul (40) von einem das erste Leuchtmodul (30) umgebenden Ring gebildet ist.

4. Beleuchtungsvorrichtung nach einem der Ansprüche 1 bis 3,
**dadurch gekennzeichnet,**
**dass** das erste Leuchtmodul (30) und/oder das zweite Leuchtmodul (40) mittels einer Schraubverbindung an einem Aufnahmeteil (70, 80) befestigt ist/sind.

5. Beleuchtungsvorrichtung nach einem der vorstehenden Ansprüche,
**dadurch gekennzeichnet,**
**dass** in Abstrahlrichtung der Beleuchtungsvorrichtung eine Zwischenscheibe (120) angeordnet ist, die so ausgebildet ist, dass der Lichtemission des von der ersten Lichtquelle (31) emittierten Lichts eine Spinnennetzoptik verliehen wird.

6. Beleuchtungsvorrichtung nach einem der vorstehenden Ansprüche,
**dadurch gekennzeichnet,**
**dass** jeder Leuchtdiode (31, 41) ein Reflektor (18; 100, 130, 140) zugeordnet ist und dass die Reflektoren (18; 100, 130, 140) des Leuchtmoduls (30, 40) dieses so ausfüllen, dass sich keine lichttechnischen Totflächen (22) ergeben.

7. Beleuchtungsvorrichtung nach einem der vorstehenden Ansprüche,
**dadurch gekennzeichnet,**
**dass** zur Bereitstellung einer Schlusslichtfunktion die Leuchtdioden (41) des zweiten Leuchtmoduls (40) so ansteuerbar sind, dass sie mit einer Leuchtkraft in einem Bereich von 5 % bis 20 % der maximalen Leuchtkraft der Leuchtdioden leuchten.

8. Beleuchtungsvorrichtung nach einem der Ansprüche 1 bis 6,
**dadurch gekennzeichnet,**
**dass** zur Bereitstellung einer Schlusslichtfunktion die Leuchtdioden (41) des ersten und zweiten Leuchtmoduls (40) so ansteuerbar sind, dass sie mit einer Leuchtkraft in einem Bereich von 5 % bis 20 % der maximalen Leuchtkraft der Leuchtdioden leuchten.

9. Beleuchtungsvorrichtung nach einem der vorstehenden Ansprüche,
**dadurch gekennzeichnet,**
**dass** zur Bereitstellung einer Bremslichtfunktion die Leuchtdioden (31) des ersten Leuchtmoduls (30) so ansteuerbar sind, dass sie mit einer Leuchtkraft in einem Bereich von 60 % bis einschließlich 100 % der maximalen Leuchtkraft der Leuchtdioden leuchten.

10. Beleuchtungsvorrichtung nach einem der vorstehenden Ansprüche,
**dadurch gekennzeichnet,**
**dass** die Leuchtdioden (41) des zweiten Leuchtmoduls (40) Duo-Leuchtdioden sind, die in einer ersten und/oder einer zweiten Farbe leuchten können und dass zur Bereitstellung eines Fahrtrichtungsanzeigers die Leuchtdioden (41) des zweiten Leuchtmoduls (41) in einer Farbe leuchten, die sich von der Farbe für die Bereitstellung der Schlusslichtfunktion und der Bremslichtfunktion unterscheidet.

## Claims

1. Illumination device for vehicles having a first lamp module (30) and a second lamp module (40) which each comprise a plurality of light-emitting diodes (31, 41), **characterized in that** the lamp modules (30, 40) make available various lighting functions, **in that** the second lamp module (40) surrounds the first lamp module (30), **in that** the light-emitting diodes (31, 41) of the lamp modules (30, 40) are arranged in a stepped fashion with respect to one another, and **in that** the lamp modules (30, 40) are plugged one into the other and can be replaced separately from one another.

2. Illumination device according to Claim 1, **characterized in that** the second lamp module (40) is arranged visually set back behind the first lamp module (30).

3. Illumination device according to Claim 1 or 2, **characterized in that** the second lamp module (40) is formed by a ring surrounding the first lamp module (30).

4. Illumination device according to one of Claims 1 to 3, **characterized in that** the first lamp module (30) and/or the second lamp module (40) is/are attached to a holding device (70, 80) by means of a screwed connection.

5. Illumination device according to one of the preceding claims, **characterized in that** an intermediate panel (120) which is embodied in such a way that the light emitted by the first light source (31) is given a spider's web optical effect is arranged in the emission direction of the illumination device.

6. Illumination device according to one of the preceding claims, **characterized in that** each light-emitting diode (31, 41) is assigned a reflector (18; 100, 130, 140), and **in that** the reflectors (18; 100, 130, 140) of the lamp module (30, 40) fill said lamp module (30, 40) in such a way that no dead areas (22) in terms of lighting technology are produced.

7. Illumination device according to one of the preceding claims, **characterized in that** in order to make available a taillight function the light-emitting diodes (41) of the second lamp module (40) can be actuated in such a way that they are illuminated with a luminous power in a range from 5% to 20% of the maximum luminous power of the light-emitting diodes.

8. Illumination device according to one of Claims 1 to 6, **characterized in that** in order to make available a taillight function the light-emitting diodes (41) of the first and second lamp modules (40) can be actuated in such a way that they are illuminated with a luminous power in a range from 5% to 20% of the maximum luminous power of the light-emitting diodes.

9. Illumination device according to one of the preceding claims, **characterized in that** in order to make available a brake light function the light-emitting diodes (31) of the first lamp module (30) can be actuated in such a way that they are illuminated with a luminous power in a range from 60% to inclusively 100% of the maximum luminous power of the light-emitting diodes.

10. Illumination device according to one of the preceding claims, **characterized in that** the light-emitting diodes (41) of the second lamp module (40) are duo light-emitting diodes which can be illuminated in a first and/or a second colour, and **in that** in order to make available a travel direction indicator the light-emitting diodes (41) of the second lamp module (41) are illuminated in a colour which differs from the colour for making available the taillight function or the brake light function.

## Revendications

1. Dispositif d'éclairage pour véhicules, qui présente un premier module de lampe (30) et un deuxième module de lampe (40) qui comprennent tous deux plusieurs diodes luminescentes (31, 41),
**caractérisé en ce que**
les modules de lampe (30, 40) permettent différentes fonctions d'éclairage, **en ce que** le deuxième module de lampe (40) entoure le premier module de lampe (30), **en ce que** les diodes luminescentes (31, 41) des modules de lampe (30, 40) sont étagées les unes par rapport aux autres et **en ce que** les modules de lampe (30, 40) sont enfichés l'un dans l'autre et peuvent être remplacés séparément l'un de l'autre.

2. Dispositif d'éclairage selon la revendication 1, **caractérisé en ce que** le deuxième module d'éclairage (40) est disposé en retrait optique derrière le premier module de lampe (30).

3. Dispositif d'éclairage selon les revendications 1 ou 2, **caractérisé en ce que** le deuxième module de lampe (40) est formé d'un anneau qui entoure le premier module de lampe (30).

4. Dispositif d'éclairage selon l'une des revendications 1 à 3, **caractérisé en ce que** le premier module de lampe (30) et/ou le deuxième module de lampe (40) sont fixés sur une pièce de réception (70, 80) au moyen d'une liaison filetée.

5. Dispositif d'éclairage selon l'une des revendications précédentes, **caractérisé en ce qu'**un disque intermédiaire (120) configuré de telle sorte que l'émission de lumière par la première source de lumière (31) reçoit une optique en toile d'araignée est disposé dans la direction d'éclairage du dispositif d'éclairage.

6. Dispositif d'éclairage selon l'une des revendications précédentes, **caractérisé en ce qu'**à chaque diode luminescente (31, 41) est associé un réflecteur (18; 100, 130, 140) et **en ce que** les réflecteurs (18; 100, 130, 140) du module d'éclairage (30, 40) remplissent ce dernier de manière à empêcher la formation de surfaces lumineusement inactives (22).

7. Dispositif d'éclairage selon l'une des revendications précédentes, **caractérisé en ce que** pour permettre une fonction lumineuse de fermeture des portes, les diodes luminescentes (41) du deuxième module d'éclairage (40) sont commandées de manière à éclairer avec une intensité d'éclairage comprise dans la plage de 5 % à 20 % de l'intensité maximale d'éclairage.

8. Dispositif d'éclairage selon l'une des revendications 1 à 6, **caractérisé en ce que** pour permettre une fonction lumineuse de fermeture des portes, les diodes luminescentes (41) du premier et du deuxième module de lampe (40) peuvent être commandées de manière à éclairer avec une intensité lumineuse comprise dans la plage de 5 % à 20 % de l'intensité maximale d'éclairage.

9. Dispositif d'éclairage selon l'une des revendications précédentes, **caractérisé en ce que** pour permettre une fonction lumineuse d'indication de freinage, les diodes luminescentes (31) du premier module de lampe (30) peuvent être commandées de manière à éclairer avec une intensité lumineuse comprise dans la plage de 60 % à 100 % de l'intensité maximale d'éclairage.

10. Dispositif d'éclairage selon l'une des revendications précédentes, **caractérisé en ce que** les diodes luminescentes (41) du deuxième module de lampe (40) sont des diodes luminescentes dites duo qui peuvent éclairer dans une première et/ou une deuxième teinte et **en ce que** pour obtenir un indicateur de changement de direction, les diodes luminescentes (41) du deuxième module d'éclairage (41) éclairent dans une couleur différente de la couleur utilisée pour la fonction d'éclairage de fermeture des portes et la fonction d'éclairage d'indication de freinage.
